(19) Europäisches Patentamt / European Patent Office / Office européen des brevets

(11) **EP 4 612 245 B1**

(12) **EUROPEAN PATENT SPECIFICATION**

(45) Date of publication and mention
of the grant of the patent:
**29.07.2026  Bulletin 2026/31**

(21) Application number: **23793498.9**

(22) Date of filing: **13.09.2023**

(51) International Patent Classification (IPC):
*C09D 105/00* *(2006.01)*    *A41D 19/00* *(2006.01)*

(52) Cooperative Patent Classification (CPC):
**C09D 105/00**

(86) International application number:
**PCT/MY2023/050076**

(87) International publication number:
**WO 2024/219958 (24.10.2024 Gazette 2024/43)**

(54) **HYDROGEL COATING FORMULATION**

HYDROGELBESCHICHTUNGSFORMULIERUNG

FORMULATION DE REVÊTEMENT D'HYDROGEL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.04.2023  MY PI2023002040**

(43) Date of publication of application:
**10.09.2025  Bulletin 2025/37**

(73) Proprietor: **HARTALEGA RESEARCH SDN BHD**
**Selangor, 43900 (MY)**

(72) Inventors:
• **WONG, See Kiat**
**Selangor, 43900 (MY)**
• **LIM, Sze Hui**
**Selangor, 43900 (MY)**
• **KUAN, Kam Hon**
**Kwan Kam Onn**
**Selangor, 43900 (MY)**
• **KUAN, Mun Leong**
**Selangor, 43900 (MY)**
• **KUAN, Eu Jin**
**Selangor, 43900 (MY)**
• **CHEAH, Mei Ling**
**Selangor, 43900 (MY)**

(74) Representative: **Marks & Clerk LLP**
**15 Fetter Lane**
**London EC4A 1BW (GB)**

(56) References cited:
**US-A1- 2005 132 466    US-A1- 2007 054 079**

## Description

### FIELD OF THE INVENTION

The present invention relates to a hydrogel coating formulation and method of manufacturing thereof, in particular the hydrogel coating formulation is used for coating an elastomeric article such as but not limited to a glove. The hydrogel coating formulation of the present invention exhibit desired swelling properties and the glove coated with the hydrogel coating formulation of the present invention exhibits desired sweat absorption capacity which helps to improve the skin hydration as well as reduces the transepidermal water loss of the user's skin.

### BACKGROUND OF THE INVENTION

A single-use glove manufactured from such as but not limited to natural rubber and synthetic latexes provides the wearer with the necessary protection against harmful substances, chemicals, allergens and microbiological agents. Glove forms a non-permeable latex between the outside environment and user's skin for protection purposes which causes lack of air circulation in the internal environment between the glove and user's skin. Prolonged glove donning can cause an increase in perspiration of the user's skin that leads to accumulation of excessive sweat on the user's skin due to the lack of air circulation.

Subsequently, prolonged accumulation of excessive sweat on the user's skin can results in skin damage and irritation such as but not limited to dryness, redness and itchiness that can lead to a more severe skin impairment such as chronic contact dermatitis and hydration dermatitis. Contact dermatitis is the skin irritation caused by direct contact between skin and glove film. Hydration dermatitis could be caused by the constant diffusion of sweat from inner dermis layer to stratum corneum which is the outermost layer of the skin.

Also, excessive sweat accumulation on the user's skin could cause the thickening of stratum corneum due to extensive swelling of corneocytes. This condition is known as hydration injury. Further, the accumulation of excessive sweat on the user's skin can act as a breeding ground for bacteria and fungi.

On the other hand, accumulation of excessive sweat on the user's skin might cause the surfactant to be leached out from the glove, causing contact dermatitis on the user's skin. Both hydration and contact dermatitis could lead to damaged skin's moisture barrier, increased transepidermal water loss (TEWL), skin dryness, skin inflammation and penetration of foreign substances into the skin.

Having said the above, an approach is developed to identify a coating formulation, particularly the coating formulation is used to coat the inner surface of an elastomeric article especially glove such that the glove can exhibits desired swelling properties and sweat absorption capacity which helps to improve the skin hydration as well as reduces the transepidermal water loss of the user's skin.

### SUMMARY OF THE INVENTION

The present invention relates to a hydrogel coating formulation comprising oat beta-glucan, colloidal oatmeal, preservative, carboxylic acid, initiator, crosslinking agent, pH adjuster and solvent, wherein the oat beta-glucan is used in an amount ranging between 0.05% to 0.5% by weight of the hydrogel coating formulation, wherein the colloidal oatmeal is used in an amount ranging between 0.05% to 0.5% by weight of the hydrogel coating formulation, wherein the preservative is used in an amount ranging between 0.01% to 0.2% by weight of the hydrogel coating formulation, wherein the carboxylic acid is used in an amount ranging between 0.1% to 2% by weight of the hydrogel coating formulation, wherein the initiator is used in an amount ranging between 0.01% to 0.12% by weight of the hydrogel coating formulation, wherein the crosslinking agent is used in an amount ranging between 0.0005% to 0.02% by weight of the hydrogel coating formulation, wherein the pH adjuster is used in an amount ranging between 0.2% to 1% by weight of the hydrogel coating formulation and wherein the solvent is used in an amount ranging between 95.66% to 99.58% by weight of the hydrogel coating formulation. The present invention further relates to a glove coated with at least one layer of coating prepared from the above-mentioned hydrogel coating formulation.

Still further, a method of preparing a hydrogel coating formulation, wherein the method comprises the steps of (i) adding a first pH adjuster and oat beta-glucan into a first solvent while stirring to produce a first mixture, wherein the first mixture is stirred at a speed of 500 rpm to 1000 rpm for 20 minutes to 40 minutes at a temperature ranging between 85°C to 95°C, (ii) adding a second pH adjuster into a carboxylic acid while stirring to produce a second mixture, wherein the second mixture is stirred at a speed of 300 rpm to 500 rpm for 5 minutes to 15 minutes at a temperature ranging between 20°C to 30°C, (iii) adding the second mixture obtained from step (ii), a crosslinking agent and an initiator one after another into the first mixture obtained from step (i) while stirring to produce a third mixture, wherein the third mixture is stirred at a speed of 200 rpm to 400 rpm for 160 minutes to 200 minutes at a temperature ranging between 65°C to 75°C, (iv) adding a second solvent into the third mixture obtained from step (iii) while stirring to produce a fourth mixture, wherein the fourth mixture is stirred at a speed of 200 rpm to 400 rpm for 10 minutes to 20 minutes at a temperature ranging between 20°C to 30°C and (v) adding colloidal oatmeal and sodium benzoate one after another with no particular order into the fourth mixture obtained from the step (iv) while stirring to produce a hydrogel coating formulation, wherein the hydrogel coating formulation is stirred at a speed of 200 rpm to 400 rpm for 50 minutes to 70 minutes at a temperature ranging between 20°C to 30°C. A glove is coated with at least one layer of hydrogel coating formulation as prepared from the above-mentioned method.

Additional aspects, features and advantages of the invention will become apparent to those skilled in the art upon consideration of the following detailed description of preferred embodiments of the invention.

**DETAILED DESCRIPTION OF THE INVENTION**

Detailed description of preferred embodiments of the present invention is disclosed herein. It should be understood, however, the embodiments are merely exemplary of the present invention, which may be embodied in various forms. Therefore, the details disclosed herein are not to be interpreted as limiting, but merely as the basis for the claims and for teaching one skilled in the art of the invention. The numerical data or ranges used in the specification are not to be construed as limiting.

The present invention relates to a hydrogel coating formulation and method of manufacturing thereof, in particular the hydrogel coating formulation is used for coating an elastomeric article such as but not limited to a glove. The hydrogel coating formulation of the present invention exhibit desired swelling properties and the glove coated with the hydrogel coating formulation of the present invention exhibits desired sweat absorption capacity which helps to improve the skin hydration as well as reduces the transepidermal water loss of the user's skin.

For the purpose of the present invention, the term "inner surface" is referring to the surface of the glove which is in contact with the user's skin. For the purpose of the present invention, the term "artificial sweat absorption capacity" is referring to the total amount of artificial sweat being absorbed. For the purpose of the present invention, the term "skin hydration" is referring to amount of water content in the stratum corneum of the skin. For the purpose of the present invention, the term "transepidermal water loss" is referring to the amount of water that passively evaporates through skin to the external environment due to water vapor pressure gradient on both sides of the skin barrier.

First aspect of the present invention discusses on a hydrogel coating formulation that is subsequently used to form a layer of coating on the inner surface of an elastomeric article such as but not limited to glove. The hydrogel coating formulation of the present invention has pH value ranging between 3 to 5, total solid content ranging between 1.24% to 2.82% by weight and viscosity ranging between 2.025 cP to 2.475 cP.

The hydrogel coating formulation comprises oat-beta glucan, colloidal oatmeal, preservative, carboxylic acid, initiator, crosslinking agent, pH adjuster and solvent (composition as described in Table 1).

The oat beta-glucan is used in an amount ranging between 0.05% and 0.5%, preferably ranging between 0.1% to 0.4%, most preferably 0.28% by weight of the hydrogel coating formulation. The oat beta-glucan is used in powder form, wherein the oat beta-glucan powder has a particle size ranging between 45 $\mu$m to 300 $\mu$m.

The colloidal oatmeal is used in an amount ranging between 0.05% and 0.5%, preferably ranging between 0.1% to 0.4%, most preferably 0.25% by weight of the hydrogel coating formulation. The colloidal oatmeal is used in powder form, wherein the colloidal oatmeal powder has a particle size ranging between 21 $\mu$m to 125 $\mu$m.

The preservative is selected from the group consisting of sodium benzoate, benzoic acid, disodium ethylenediaminetetraacetic acid, calcium sorbate and mixtures therefrom, preferably sodium benzoate, wherein the preservative is used in an amount ranging between 0.01% to 0.2%, preferably ranging between 0.05% to 0.1%, most preferably 0.08% by weight of the hydrogel coating formulation.

The carboxylic acid is selected from the group consisting of itaconic acid, acrylic acid, methacrylic acid, alginic acid and mixtures therefrom, preferably itaconic acid, wherein the carboxylic acid is used in an amount ranging between 0.1% to 2%, preferably ranging between 0.56% to 1.12%, most preferably 0.84% by weight of the hydrogel coating formulation.

The initiator is selected from the group consisting of ammonium persulfate, sodium persulfate, potassium persulfate, tetramethylethylenediamine and mixtures therefrom, preferably ammonium persulfate, wherein the initiator is used in an amount ranging between 0.01% to 0.12%, preferably ranging between 0.03% to 0.09%, most preferably 0.06% by weight of the hydrogel coating formulation.

The crosslinking agent is selected from the group consisting of N-N'-methylenebisacrylamide, glutaraldehyde, gallic acid and mixtures therefrom, preferably N-N'-methylenebisacrylamide, wherein the crosslinking agent is used in an amount ranging between 0.0005% to 0.02%, preferably ranging between 0.001% to 0.01%, most preferably 0.003% by weight of the hydrogel coating formulation.

The pH adjuster comprises first pH adjuster and second pH adjuster. The pH adjuster is used in an amount ranging between 0.2% to 1%, preferably ranging between 0.4% to 0.7%, most preferably 0.56% by weight of the hydrogel coating formulation. The first pH adjuster is selected from the group consisting of citric acid, ascorbic acid and mixtures therefrom, preferably citric acid, wherein the first pH adjuster is used in an amount ranging between 0.1% to 0.5%, preferably ranging between 0.2% to 0.35%, most preferably 0.28% by weight of the hydrogel coating formulation. The second pH adjuster is selected from the group consisting of sodium hydroxide, potassium hydroxide and mixtures therefrom, preferably sodium hydroxide, wherein the second pH adjuster is used in an amount ranging between 0.1% to 0.5%, preferably ranging between 0.2% to 0.35%, most preferably 0.28% by weight of the hydrogel coating formulation.

The solvent comprises first solvent and second solvent. The first solvent and second solvent are selected from the group consisting of distilled water, soft water, deionized water, ultrapure water and mixtures therefrom, preferably distilled water. The solvent is used in an amount ranging between 95.66% to 99.58%, preferably ranging between 97.18% to 98.76%, most preferably 97.93% by weight of the hydrogel coating formulation. The first solvent is used in an amount ranging between 19.13% to 19.92%, preferably ranging between 19.44% to 19.75%, most preferably 19.59% by weight of the hydrogel coating formulation. The second solvent is used in an amount ranging between 76.53% to 79.66%, preferably ranging between 77.74% to 79.01%, most preferably 78.34% by weight of the hydrogel coating formulation.

For the purpose of the present invention, the term "soft water" is referring to water that contains less than 17 ppm of ions such as but not limited to calcium and magnesium. For the purpose of the present invention, the term "ultrapure water" is referring to water that contains only $H_2O$ as well as balanced number of $H^+$ and $OH^-$ ions, has a resistivity of 18.2 M$\Omega$.cm, total organic carbon of less than 10 ppb, bacterial count of less than 10 CFU/ml and must not contain any detectable endotoxins.

Table 1 shows chemical components and compositions of the hydrogel coating formulation of the present invention.

Table 1: Chemical components and compositions of the hydrogel coating formulation of the present invention

| Chemical components | Working range (%) | Preferred range (%) | Typical value (%) |
|---|---|---|---|
| Oat beta-glucan | 0.05 to 0.5 | 0.1 to 0.4 | 0.28 |
| Colloidal oatmeal | 0.05 to 0.5 | 0.1 to 0.4 | 0.25 |
| Preservative | 0.01 to 0.2 | 0.05 to 0.1 | 0.08 |
| Carboxylic acid | 0.1 to 2 | 0.56 to 1.12 | 0.84 |
| Initiator | 0.01 to 0.12 | 0.03 to 0.09 | 0.06 |
| Crosslinking agent | 0.0005 to 0.02 | 0.001 to 0.01 | 0.003 |
| First pH adjuster | 0.1 to 0.5 | 0.2 to 0.35 | 0.28 |
| Second pH adjuster | 0.1 to 0.5 | 0.2 to 0.35 | 0.28 |
| First solvent | 19.13 to 19.92 | 19.44 to 19.75 | 19.59 |
| Second solvent | 76.53 to 79.66 | 77.74 to 79.01 | 78.34 |

Second aspect of the present invention discusses on a method of preparing the hydrogel coating formulation of the present invention, wherein the method comprises the steps of:

i. adding first pH adjuster and oat beta-glucan (composition as per Table 1) into the first solvent (composition as per Table 1) while stirring to produce a first mixture, wherein the first mixture is stirred at a speed of 500 rpm to 1000 rpm, preferably 750 rpm for 20 minutes to 40 minutes, preferably 30 minutes at a temperature ranging between 85°C to 95°C, preferably 90°C;

ii. adding second pH adjuster into the carboxylic acid (composition as per Table 1) while stirring to produce a second mixture, wherein the second mixture is stirred at a speed of 300 rpm to 500 rpm, preferably 400 rpm for 5 minutes to 15 minutes, preferably 10 minutes at a temperature ranging between 20°C to 30°C, preferably 25°C, wherein the second mixture has a pH of 4.5 and wherein the second mixture is a partially neutralized carboxylic acid;

iii. adding the second mixture obtained from step (ii), crosslinking agent and initiator (composition as per Table 1) one after another into the first mixture obtained from step (i) while stirring to produce the third mixture, wherein the third mixture is stirred at a speed of 200 rpm to 400 rpm, preferably 300 rpm for 160 minutes to 200 minutes, preferably 180 minutes at a temperature ranging between 65°C to 75°C, preferably 70°C;

iv. adding second solvent (composition as per Table 1) into the third mixture obtained from step (iii) while stirring to produce the fourth mixture, wherein the fourth mixture is stirred at a speed of 200 rpm to 400 rpm, preferably 300 rpm for 10 minutes to 20 minutes, preferably 15 minutes at a temperature ranging between 20°C to 30°C, preferably 25°C; and

v. adding colloidal oatmeal and sodium benzoate (composition as per Table 1) one after another with no particular order into the fourth mixture obtained from the step (iv) while stirring to produce the hydrogel coating formulation of the present invention, wherein the hydrogel coating formulation of the present invention is stirred at a speed of 200 rpm to 400 rpm, preferably 300 rpm for 50 minutes to 70 minutes, preferably 60 minutes at a temperature ranging between 20°C to 30°C, preferably 25°C.

For the purpose of the present invention, the phrase "one after another with no particular order" signifies that any one of the chemicals may be added first and followed by the other since order of mixing is not crucial.

The hydrogel coating formulation of the present invention is a water-based hydrogel coating formulation which can be used to produce a hydrogel coating layer on a glove. For the purpose of the present invention, the term "hydrogel" refers to three-dimensional polymer network structures having hydrophilic properties that are capable of swelling and retaining possibly huge volumes of water in the swollen state while maintaining their structures.

Third aspect of the present invention discusses on a glove of the present invention that is coated with at least a layer of hydrogel coating formulation of the present invention in which its composition is as described in Table 1. The glove is prepared adopting any commonly known method in the glove manufacturing industry, wherein the method comprises the steps of:

i. cleaning a former to produce a cleaned former, wherein the first step is treatment using acidic solutions such as but not limited to nitric acid, the second step is treatment using alkaline solutions such as but not limited to aqueous sodium hydroxide solution, the third step is rinsing with hot water and the fourth step is drying to ensure the former surface is cleaned;

ii. dipping the cleaned former obtained in step (i) into a coagulant solution at a temperature ranging between 55°C to 65°C to coat a coagulant layer on the former, wherein the coagulant solution is such as but not limited to 10 wt% to 20 wt% of calcium nitrate;

iii. drying the coagulant layer coated on the former obtained in step (ii) at a temperature ranging between 55°C to 65°C to obtain a dried coagulant layer;

iv. dipping the dried coagulant layer coated on the former obtained in step (iii) into the latex dipping tank containing latex formulation at a temperature ranging between 40°C to 60°C to coat a latex layer on the former;

v. drying the latex layer coated on the former obtained in step (iv) at a temperature ranging between 80°C to 150°C to obtain dried latex film;

vi. pre-leaching the dried latex film coated on the former obtained in step (v) with hot water at a temperature ranging between 40°C to 60°C to leach out chemical residues to obtain pre-leached latex film;

vii. vulcanizing the pre-leached latex film coated on the former obtained in step (vi) by heating at a temperature ranging between 80°C to 150°C to leach out chemical residues to obtain vulcanized glove;

viii. chlorinating the vulcanized glove obtained in step (vii) to obtain a treated glove, wherein the chlorine is used in a strength of 800 ppm to 2000 ppm;

ix. neutralizing the chlorinated glove obtained in step (viii) with alkaline treatment and water to leach out chemical residues to obtain neutralized glove;

x. dipping the neutralized glove obtained in step (ix) into the dipping tank containing hydrogel coating formulation of the present invention (composition as described in Table 1) at a temperature ranging between 55°C to 65°C, preferably 60°C for a time duration ranging between 5 seconds to 20 seconds, preferably 10 seconds to obtain coated glove;

xi. drying the coated glove obtained in step (x) to produce glove of the present invention; and

xii. stripping the glove of the present invention obtained in step (xi) from the former.

The latex formulation that is mentioned in step iv can be of any conventional latex formulation, preferably comprises a base polymer, accelerator, crosslinking agent and opacity enhancer (composition as described in Table 2).

The base polymer is selected from the group consisting of acrylonitrile butadiene rubber latex, natural rubber latex, polychloroprene latex, polyisoprene latex and mixtures thereof. The base polymer is used in an amount of 100 phr (also referred to parts per hundred rubber), wherein the parts per hundred rubber is used as a basis for amounting other chemicals.

The accelerator is carbamate-based accelerator. The accelerator is used in an amount ranging between 0.5 phr to 2.0 phr, preferably ranging between 0.5 phr to 1.0 phr, most preferably 0.75 phr.

The crosslinking agent is selected from the group consisting of sulphur, zinc oxide and mixtures therefrom, preferably mixtures of sulphur and zinc oxide. The crosslinking agent is used in an amount ranging between 1.0 phr to 5.0 phr, preferably ranging between 2.0 phr to 4.0 phr, most preferably 3.0 phr.

The opacity enhancer is titanium oxide. The opacity enhancer is used in an amount ranging between 0.5 phr to 2.0 phr, preferably ranging between 0.7 phr to 1.8 phr, most preferably 1.5 phr.

The pH adjuster is selected from the group consisting of ammonia, aqueous potassium hydroxide and mixtures therefrom, preferably ammonia. The pH adjuster is used in an amount ranging between 0.3 phr to 0.7 phr, preferably ranging between 0.4 phr to 0.6 phr, most preferably 0.5 phr.

The solvent is selected from the group consisting of soft water, distilled water and mixtures therefrom, preferably soft water. The solvent is used in an amount ranging between 240 phr to 270 phr, preferably ranging between 250 phr to 260 phr, most preferably 255 phr.

Table 2 shows chemical components and compositions of the latex formulation of the present invention.

Table 2: Chemical components and compositions of the latex formulation of the present invention

| Chemical components | Working range (*phr) | Preferred range (*phr) | Typical value (*phr) |
|---|---|---|---|
| Base polymer | 100 | 100 | 100 |
| Accelerator | 0.5 to 2.0 | 0.5 to 1.0 | 0.75 |
| Crosslinking agent | 1.0 to 5.0 | 2.0 to 4.0 | 3.0 |
| Opacity enhancer | 0.5 to 2.0 | 0.7 to 1.8 | 1.5 |
| pH adjuster | 0.3 to 0.7 | 0.4 to 0.6 | 0.5 |
| Solvent | 240 to 270 | 250 to 260 | 255 |
| *parts per hundred rubber | | | |

The glove of the present invention may be single layered or multi-layered.

The following example is constructed to illustrate the present invention in a non-limiting sense.

The glove of the present invention is prepared by using latex formulation as summarized in Table 2 and coated with the hydrogel coating formulation of the present invention as summarized in Table 1 adopting any commonly known method in the glove manufacturing industry, wherein the hydrogel coating formulation is prepared based on the method as described in the second aspect of the present invention.

Test results for the hydrogel coating formulation and glove of the present invention

The control non-hydrogel coating formulation comprises oat beta-glucan in an amount of 0.28% by weight of the non-hydrogel coating formulation, colloidal oatmeal in an amount of 0.25% by weight of the non-hydrogel coating formulation, sodium benzoate in an amount of 0.08% by weight of the non-hydrogel coating formulation and solvent in an amount of 99.39% by weight of the non-hydrogel coating formulation, wherein the non-hydrogel coating formulation is prepared using any commonly known method in the coating manufacturing industry. The control glove refers to glove having a non-hydrogel coating layer prepared from the non-hydrogel coating formulation as discussed above. Control glove is prepared using any commonly known method in the glove manufacturing industry.

Meanwhile, the glove of the present invention is prepared by using latex formulation as summarized in Table 2 and coated with the hydrogel coating formulation of the present invention as summarized in Table 1 adopting any commonly known method in the glove manufacturing industry, wherein the hydrogel coating formulation is prepared based on the method as described in the second aspect of the present invention.

The artificial sweat solution comprises sodium chloride in an amount of 1.08% by weight of the artificial sweat solution, lactic acid (88%) in an amount of 0.12% by weight of the artificial sweat solution and urea in an amount of 0.13% by weight of the artificial sweat solution. The remaining of the artificial sweat solution consist of solvent, wherein the solvent is deionised water. The pH of the artificial sweat solution is adjusted to pH 6.5 with sodium hydroxide.

Swelling Capacity

The control non-hydrogel coating formulation and hydrogel coating formulation of the present invention are dried at a temperature of 50°C for a time period of 12 hours using an oven. Subsequently, the dried control non-hydrogel coating formulation and hydrogel formulation of the present invention are inserted into separate tea bags. **The** weight of the tea bags together with the dried coating formulations are then measured ($M_1$). **The** tea bags together with the dried coating formulations are soaked in an artificial sweat solution. Subsequently, the tea bags are taken out from the artificial sweat solution for a time interval of 5 minutes, 10 minutes, 15 minutes, 30 minutes, 45 minutes and 60 minutes and the weight of the soaked tea bags was measured ($M_2$), wherein the soaked tea bags are gently pat dried using filter paper prior to measuring their weight.

**The** formula for calculating the swelling ratio (%) of coating formulation is as shown below:

$$Swelling\ Ratio\ (\%) = \left(\frac{(M_1 + M_2)}{M_1}\right) x\ 100\%$$

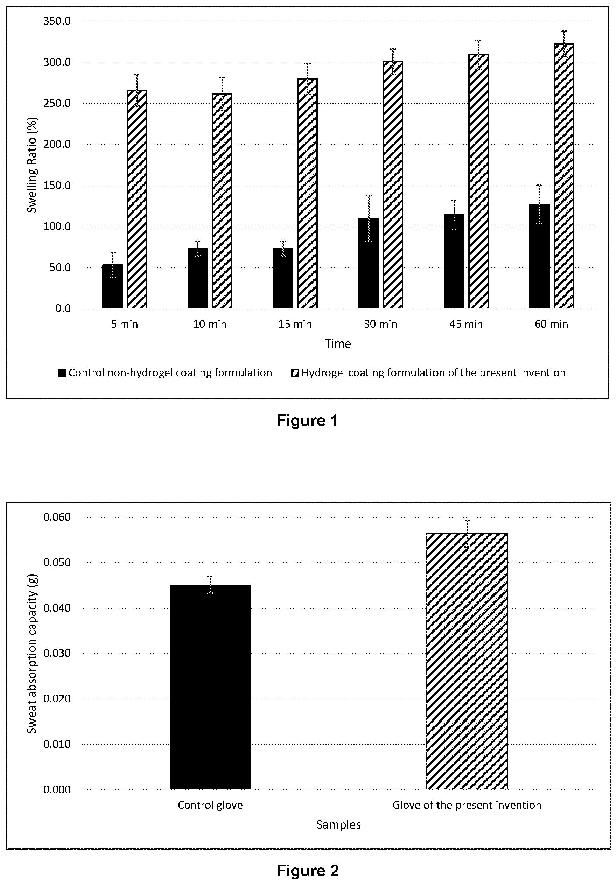

**Figure** 1 shows the swelling ratio of control non-hydrogel coating formulation and hydrogel coating formulation of the present invention. Based on the results obtained, it is noticeable that the hydrogel coating formulation of the present invention has better swelling ratio as compared to the control non-hydrogel coating formulation. Hence, the hydrogel coating formulation of the present invention improves the swelling capacity of the glove. This indicates that the glove of the present invention able to absorb more sweat which subsequently able to reduce the irritation on user's skin caused by the accumulation of sweat due to prolonged glove donning.

Artificial Sweat Absorption Capacity

The weight of the control glove and glove of the present invention are measured ($W_1$). Subsequently, the control glove and glove of the present invention are donned onto separate formers with the inner surface facing outwards and dried at a temperature of 60°C for a time period of 30 minutes using an oven. The formers are soaked into the artificial sweat solution for a time period of 60 seconds. Subsequently, the formers are taken out of the artificial sweat solution and let the excess sweat to drip off from the glove surface for a time period of 10 minutes. The artificial sweat solution droplets on the fingertips of the gloves are gently pat dried using filter paper. Subsequently, the control glove and glove of the present invention are then stripped off from the formers. Lastly, the weight of the control glove and glove of the present invention are measured ($W_2$).

$$Sweat\ absorption\ capacity\ (g) = W_2 - W_1$$

**Figure** 2 shows the sweat absorption capacity of control glove and glove of the present invention. Based on the results obtained, it is noticeable that the glove having coating layer prepared from the hydrogel coating formulation of the present invention has better sweat absorption capacity as compared to the control glove. This indicates that the hydrogel coating formulation of the present invention improves the sweat absorption capacity of the glove.

*In-vivo* assessment of skin properties (i.e. skin hydration and transepidermal water loss) in non-clinical settings

For the purpose of the present invention, the term "non-clinical setting" is referring to space or platform where it does not involve the examination and treatment of people.

10 adults aged ranging between 25 years to 35 years old are involved as subjects for in-vivo assessments. The subjects are randomly grouped into two groups namely, Group A and Group B, wherein each group consist of 5 subjects. During the pre-irritation phase, both the subjects of Group A and Group B are requested to wear a nitrile glove having no coating layer on both left and right hands for 8 hours per day for 3 consecutive days for pre-irritation purposes. The purpose of pre-irritation is to reset the measurement baseline of the subject by treating their hands with the same conditions before the active phase.

Subsequently, during the active phase, the subjects of Group A are requested to wear the control glove on their left hand and the glove of the present invention on their right hand for 8 hours per day for 4 consecutive days. Also, during the active phase, the subjects of Group B are requested to wear the control glove on their right hand and the glove of the present invention on their left hand for 8 hours per day for 4 consecutive days. During the pre-irritation phase and active phase, the subjects of Group A and Group B are instructed to discard the gloves and wear new gloves for every 2 hours as well as not allowed to wear moisturizers.

The subjects are tested for transepidermal water loss (TEWL) using a transepidermal water loss analyzer. Further, the subjects are tested for skin hydration using a skin moisture analyzer. The measurements (i.e. TEWL and skin hydration) are taken after at least 20 minutes of acclimatization under standard climatic conditions (21±1°C; 50±10% relative humidity). Measurements are expressed as the mean values of the readings of TEWL and skin hydration.

The formula for calculating the percentage of difference in TEWL is as shown below:

$$Percentage\ of\ difference\ in\ TEWL\ (\%) = (TEWL_4 - TEWL_1)/TEWL_1\ x\ 100$$

wherein $TEWL_4$ is the measurement of TEWL measured on the day 4 of the active phase and $TEWL_1$ is the measurement of TEWL measured on the day 1 of the active phase.

The formula for calculating the percentage of difference in skin hydration is as shown below:

$$Percentage\ of\ difference\ in\ skin\ hydration\ (\%) = (SH_4 - SH_1)/SH_1\ x\ 100$$

wherein $SH_4$ is the measurement of skin hydration measured on the day 4 of the active phase and $SH_1$ is the measurement of skin hydration measured on the day 1 of the active phase.

Table 3 shows the average percentage of difference in TEWL and skin hydration of the subjects (Group A and Group B) who wore control glove on one hand and glove of the present invention on another hand between day 1 and day 4 of the active phase.

Table 3 shows the average percentage of difference in TEWL and skin hydration of the subjects between day 1 and day 4 of the active phase

| Average percentage of difference in skin hydration (%) | | Average percentage of difference in TEWL (%) | |
|---|---|---|---|
| Control glove | Glove of the present invention | Control glove | Glove of the present invention |
| +4.20 | +14.50 | +13.40 | -1.60 |
| Remark: The symbol "+" indicates an increase in the reading between day 1 and day 4 of the active phase. The symbol "-" indicates a decrease in the reading between day 1 and day 4 of the active phase. | | | |

Based on the results obtained in Table 3, it is noticeable that the average percentage of difference in skin hydration of subjects wearing glove of the present invention is higher as compared to subjects wearing control glove. This indicates that the glove having coating layer prepared from the hydrogel coating formulation of the present invention improves the skin hydration of the user's skin.

Further, based on the results obtained in Table 3, it is noticeable that the average percentage of difference in TEWL of subjects wearing glove of the present invention is lower as compared to subjects wearing control glove. This indicates that the glove having coating layer prepared from the hydrogel coating formulation of the present invention reduces the transepidermal water loss of the user's skin.

As a whole, the glove having coating layer prepared from the hydrogel coating formulation of the present invention can overcome the conventional shortcoming by providing the desired swelling properties and sweat absorption capacity which helps to improve the skin hydration as well as reduces the transepidermal water loss of the user's skin.

The terminology used herein is for the purpose of describing particular example embodiments only and is not intended to be limiting. As used herein, the singular forms "a", "an" and "the" may be intended to include the plural forms as well, unless the context clearly indicates otherwise. The terms "comprises", "comprising", "including", and "having" are inclusive and therefore specify the presence of stated features, integers, steps, operations, elements, and/or components, but do not preclude the presence or addition of one or more other features, integers, steps, operations, elements, components, and/or groups therefrom.

The method steps, processes, and operations described herein are not to be construed as necessarily requiring their performance in the particular order discussed or illustrated, unless specifically identified as an order of performance. It is also to be understood that additional or alternative steps may be employed. The use of the expression "at least" or "at least one" suggests the use of one or more elements, as the use may be in one of the embodiments to achieve one or more of the desired objects or results.

**Claims**

1. A hydrogel coating formulation comprising oat beta-glucan, colloidal oatmeal, preservative, carboxylic acid, initiator, crosslinking agent, pH adjuster and solvent, wherein the oat beta-glucan is used in an amount ranging between 0.05% to 0.5% by weight of the hydrogel coating formulation, wherein the colloidal oatmeal is used in an amount ranging between 0.05% to 0.5% by weight of the hydrogel coating formulation, wherein the preservative is used in an amount ranging between 0.01% to 0.2% by weight of the hydrogel coating formulation, wherein the carboxylic acid is used in an amount ranging between 0.1% to 2% by weight of the hydrogel coating formulation, wherein the initiator is used in an amount ranging between 0.01% to 0.12% by weight of the hydrogel coating formulation, wherein the crosslinking agent is used in an amount ranging between 0.0005% to 0.02% by weight of the hydrogel coating formulation, wherein the pH adjuster is used in an amount ranging between 0.2% to 1% by weight of the hydrogel coating formulation and wherein the solvent is used in an amount ranging between 95.66% to 99.58% by weight of the hydrogel coating formulation.

2. The hydrogel coating formulation as claimed in claim 1, wherein the oat beta-glucan is used in an amount ranging between 0.1% to 0.4% by weight of the hydrogel coating formulation.

3. The hydrogel coating formulation as claimed in claim 1, wherein the colloidal oatmeal is used in an amount ranging between 0.1% to 0.4% by weight of the hydrogel coating formulation.

4. The hydrogel coating formulation as claimed in claim 1, wherein the preservative is selected from the group consisting of sodium benzoate, benzoic acid, disodium ethylenediaminetetraacetic acid, calcium sorbate and mixtures therefrom.

5. The hydrogel coating formulation as claimed in claim 1, wherein the preservative is used in an amount ranging between 0.05% to 0.1% by weight of the hydrogel coating formulation.

6. The hydrogel coating formulation as claimed in claim 1, wherein the carboxylic acid is selected from the group consisting of itaconic acid, acrylic acid, methacrylic acid, alginic acid and mixtures therefrom.

7. The hydrogel coating formulation as claimed in claim 1, wherein the carboxylic acid is used in an amount ranging between 0.56% to 1.12% by weight of the hydrogel coating formulation.

8. The hydrogel coating formulation as claimed in claim 1, wherein the initiator is selected from the group consisting of ammonium persulfate, sodium persulfate, potassium persulfate, tetramethylethylenediamine and mixtures therefrom.

9. The hydrogel coating formulation as claimed in claim 1, wherein the initiator is used in an amount ranging between 0.03% to 0.09% by weight of the hydrogel coating formulation.

10. The hydrogel coating formulation as claimed in claim 1, wherein the crosslinking agent is selected from the group consisting of N-N'-methylenebisacrylamide, glutaraldehyde, gallic acid and mixtures therefrom.

11. The hydrogel coating formulation as claimed in claim 1, wherein the crosslinking agent is used in an amount ranging between 0.001% to 0.01% by weight of the hydrogel coating formulation.

12. The hydrogel coating formulation as claimed in claim 1, wherein the pH adjuster comprises a first pH adjuster and a second pH adjuster.

13. The hydrogel coating formulation as claimed in claim 12, wherein the first pH adjuster is selected from the group consisting of citric acid, ascorbic acid and mixtures therefrom.

14. The hydrogel coating formulation as claimed in claim 12, wherein the first pH adjuster is used in an amount ranging between 0.1% to 0.5% by weight of the hydrogel coating formulation.

15. The hydrogel coating formulation as claimed in claim 12, wherein the second pH adjuster is selected from the group consisting of sodium hydroxide, potassium hydroxide and mixtures therefrom.

16. The hydrogel coating formulation as claimed in claim 12, wherein the second pH adjuster is used in an amount ranging between 0.1% to 0.5% by weight of the hydrogel coating formulation.

17. The hydrogel coating formulation as claimed in claim 1, wherein the solvent is selected from the group consisting of distilled water, soft water, deionized water, ultrapure water and mixtures therefrom.

18. The hydrogel coating formulation as claimed in claim 1, wherein the solvent is used in an amount ranging between 97.18% to 98.76% by weight of the hydrogel coating formulation.

19. A glove is coated with at least one layer of coating prepared from the hydrogel coating formulation as claimed in claims 1 to 18.

20. A method of preparing a hydrogel coating formulation, wherein the method comprises the steps of:

   i. adding a first pH adjuster and oat beta-glucan into a first solvent while stirring to produce a first mixture, wherein the first mixture is stirred at a speed of 500 rpm to 1000 rpm for 20 minutes to 40 minutes at a temperature ranging between 85°C to 95°C;
   ii. adding a second pH adjuster into a carboxylic acid while stirring to produce a second mixture, wherein the second mixture is stirred at a speed of 300 rpm to 500 rpm for 5 minutes to 15 minutes at a temperature ranging between 20°C to 30°C;

iii. adding the second mixture obtained from step (ii), a crosslinking agent and an initiator one after another into the first mixture obtained from step (i) while stirring to produce a third mixture, wherein the third mixture is stirred at a speed of 200 rpm to 400 rpm for 160 minutes to 200 minutes at a temperature ranging between 65°C to 75°C;

iv. adding a second solvent into the third mixture obtained from step (iii) while stirring to produce a fourth mixture, wherein the fourth mixture is stirred at a speed of 200 rpm to 400 rpm for 10 minutes to 20 minutes at a temperature ranging between 20°C to 30°C; and

v. adding colloidal oatmeal and sodium benzoate one after another with no particular order into the fourth mixture obtained from the step (iv) while stirring to produce a hydrogel coating formulation, wherein the hydrogel coating formulation is stirred at a speed of 200 rpm to 400 rpm for 50 minutes to 70 minutes at a temperature ranging between 20°C to 30°C.

21. A glove is coated with at least one layer of hydrogel coating formulation as prepared from the method as claimed in claim 20.

## Patentansprüche

1. Hydrogel-Beschichtungsformulierung, die Hafer-Beta-Glucan, kolloidales Hafermehl, Konservierungsmittel, Carbonsäure, Initiator, Vernetzungsmittel, pH-Einstellmittel und Lösungsmittel umfasst, wobei das Hafer-Beta-Glucan in einer Menge im Bereich zwischen 0,05 Gew.-% bis 0,5 Gew.-% der Hydrogel-Beschichtungsformulierung verwendet wird, wobei das kolloidale Hafermehl in einer Menge im Bereich zwischen 0,05 Gew.-% bis 0,5 Gew.-% der Hydrogel-Beschichtungsformulierung verwendet wird, wobei das Konservierungsmittel in einer Menge im Bereich zwischen 0,01 Gew.-% bis 0,2 Gew.-% der Hydrogel-Beschichtungsformulierung verwendet wird, wobei die Carbonsäure in einer Menge im Bereich zwischen 0,1 Gew.-% bis 2 Gew.-% der Hydrogel-Beschichtungsformulierung verwendet wird, wobei der Initiator in einer Menge im Bereich zwischen 0,01 Gew.-% bis 0,12 Gew.-% der Hydrogel-Beschichtungsformulierung verwendet wird, wobei das Vernetzungsmittel in einer Menge im Bereich zwischen 0,0005 Gew.-% bis 0,02 Gew.-% der Hydrogel-Beschichtungsformulierung verwendet wird, wobei das pH-Einstellmittel in einer Menge im Bereich zwischen 0,2 Gew.-% bis 1 Gew.-% der Hydrogel-Beschichtungsformulierung verwendet wird, und wobei das Lösungsmittel in einer Menge im Bereich zwischen 95,66 Gew.-% bis 99,58 Gew.-% der Hydrogel-Beschichtungsformulierung verwendet wird.

2. Hydrogel-Beschichtungsformulierung nach Anspruch 1, wobei das Hafer-Beta-Glucan in einer Menge im Bereich zwischen 0,1 Gew.-% bis 0,4 Gew.-% der Hydrogel-Beschichtungsformulierung verwendet wird.

3. Hydrogel-Beschichtungsformulierung nach Anspruch 1, wobei das kolloidale Hafermehl in einer Menge im Bereich zwischen 0,1 Gew.-% bis 0,4 Gew.-% der Hydrogel-Beschichtungsformulierung verwendet wird.

4. Hydrogel-Beschichtungsformulierung nach Anspruch 1, wobei das Konservierungsmittel ausgewählt ist aus der Gruppe bestehend aus Natriumbenzoat, Benzoesäure, Dinatriumethylendiamintetraessigsäure, Calciumsorbat und Gemischen davon.

5. Hydrogel-Beschichtungsformulierung nach Anspruch 1, wobei das Konservierungsmittel in einer Menge im Bereich zwischen 0,05 Gew.-% bis 0,1 Gew.-% der Hydrogel-Beschichtungsformulierung verwendet wird.

6. Hydrogel-Beschichtungsformulierung nach Anspruch 1, wobei die Carbonsäure ausgewählt ist aus der Gruppe bestehend aus Itaconsäure, Acrylsäure, Methacrylsäure, Alginsäure und Gemischen davon.

7. Hydrogel-Beschichtungsformulierung nach Anspruch 1, wobei die Carbonsäure in einer Menge im Bereich zwischen 0,56 Gew.-% bis 1,12 Gew.-% der Hydrogel-Beschichtungsformulierung verwendet wird.

8. Hydrogel-Beschichtungsformulierung nach Anspruch 1, wobei der Initiator ausgewählt ist aus der Gruppe bestehend aus Ammoniumpersulfat, Natriumpersulfat, Kaliumpersulfat, Tetramethylethylendiamin und Gemischen davon.

9. Hydrogel-Beschichtungsformulierung nach Anspruch 1, wobei der Initiator in einer Menge im Bereich zwischen 0,03 Gew.-% bis 0,09 Gew.-% der Hydrogel-Beschichtungsformulierung verwendet wird.

10. Hydrogel-Beschichtungsformulierung nach Anspruch 1, wobei das Vernetzungsmittel ausgewählt ist aus der Gruppe bestehend aus N-N'-Methylenbisacrylamid, Glutaraldehyd, Gallussäure und Gemischen davon.

11. Hydrogel-Beschichtungsformulierung nach Anspruch 1, wobei das Vernetzungsmittel in einer Menge im Bereich zwischen 0,001 Gew.-% bis 0,01 Gew.-% der Hydrogel-Beschichtungsformulierung verwendet wird.

12. Hydrogel-Beschichtungsformulierung nach Anspruch 1, wobei das pH-Einstellmittel ein erstes pH-Einstellmittel und ein zweites pH-Einstellmittel umfasst.

13. Hydrogel-Beschichtungsformulierung nach Anspruch 12, wobei das erste pH-Einstellmittel ausgewählt ist aus der Gruppe bestehend aus Zitronensäure, Ascorbinsäure und Gemischen davon.

14. Hydrogel-Beschichtungsformulierung nach Anspruch 12, wobei das erste pH-Einstellmittel in einer Menge im Bereich zwischen 0,1 Gew.-% bis 0,5 Gew.-% der Hydrogel-Beschichtungsformulierung verwendet wird.

15. Hydrogel-Beschichtungsformulierung nach Anspruch 12, wobei das zweite pH-Einstellmittel ausgewählt ist aus der Gruppe bestehend aus Natriumhydroxid, Kaliumhydroxid und Gemischen davon.

16. Hydrogel-Beschichtungsformulierung nach Anspruch 12, wobei das zweite pH-Einstellmittel in einer Menge im Bereich zwischen 0,1 Gew.-% bis 0,5 Gew.-% der Hydrogel-Beschichtungsformulierung verwendet wird.

17. Hydrogel-Beschichtungsformulierung nach Anspruch 1, wobei das Lösungsmittel ausgewählt ist aus der Gruppe bestehend aus destilliertem Wasser, weichem Wasser, entionisiertem Wasser, Reinstwasser und Gemischen davon.

18. Hydrogel-Beschichtungsformulierung nach Anspruch 1, wobei das Lösungsmittel in einer Menge im Bereich zwischen 97,18 Gew.-% bis 98,76 Gew.-% der Hydrogel-Beschichtungsformulierung verwendet wird.

19. Handschuh, der mit mindestens einer Schicht einer Beschichtung beschichtet ist, welche aus der Hydrogel-Beschichtungsformulierung nach den Ansprüchen 1 bis 18 hergestellt wurde.

20. Verfahren zum Herstellen einer Hydrogel-Beschichtungsformulierung, wobei das Verfahren die folgenden Schritte umfasst:

   i. Zugeben eines ersten pH-Einstellmittels und von Hafer-Beta-Glucan zu einem ersten Lösungsmittel unter Rühren, um ein erstes Gemisch zu erzeugen, wobei das erste Gemisch 20 Minuten bis 40 Minuten bei einer Temperatur im Bereich zwischen 85 °C bis 95 °C mit einer Drehzahl von 500 U/min bis 1000 U/min gerührt wird;
   ii. Zugeben eines zweiten pH-Einstellmittels zu einer Carbonsäure unter Rühren, um ein zweites Gemisch zu erzeugen, wobei das zweite Gemisch 5 Minuten bis 15 Minuten bei einer Temperatur im Bereich zwischen 20 °C bis 30 °C mit einer Drehzahl von 300 U/min bis 500 U/min gerührt wird;
   iii. Zugeben des in Schritt (ii) erhaltenen zweiten Gemisches, eines Vernetzungsmittels und eines Initiators nacheinander zu dem in Schritt (i) erhaltenen ersten Gemisch unter Rühren, um ein drittes Gemisch zu erzeugen, wobei das dritte Gemisch 160 Minuten bis 200 Minuten bei einer Temperatur im Bereich zwischen 65 °C bis 75 °C mit einer Drehzahl von 200 U/min bis 400 U/min gerührt wird;
   iv. Zugeben eines zweiten Lösungsmittels zu dem in Schritt (iii) erhaltenen dritten Gemisch unter Rühren, um ein viertes Gemisch zu erzeugen, wobei das vierte Gemisch 10 Minuten bis 20 Minuten bei einer Temperatur im Bereich zwischen 20 °C bis 30 °C mit einer Drehzahl von 200 U/min bis 400 U/min gerührt wird; und
   v. Zugeben von kolloidalem Hafermehl und Natriumbenzoat nacheinander ohne bestimmte Reihenfolge zu dem in Schritt (iv) erhaltenen vierten Gemisch unter Rühren, um eine Hydrogel-Beschichtungsformulierung zu erzeugen, wobei die Hydrogel-Beschichtungsformulierung 50 Minuten bis 70 Minuten bei einer Temperatur im Bereich zwischen 20 °C bis 30 °C mit einer Drehzahl von 200 U/min bis 400 U/min gerührt wird.

21. Handschuh, der mit mindestens einer Schicht einer Hydrogel-Beschichtungsformulierung beschichtet ist, welche nach dem Verfahren nach Anspruch 20 hergestellt wurde.

**Revendications**

1. Formulation de revêtement d'hydrogel comprenant du bêta-glucane d'avoine, de l'avoine colloïdale, un conservateur, un acide carboxylique, un initiateur, un agent de réticulation, un correcteur de pH et un solvant, dans laquelle le bêta-glucane d'avoine est utilisé en une quantité comprise entre 0,05 % et 0,5 % en poids de la formulation de revêtement d'hydrogel, dans laquelle l'avoine colloïdale est utilisée en une quantité comprise entre 0,05 % et 0,5 % en poids de la formulation de revêtement d'hydrogel, dans laquelle le conservateur est utilisé en une quantité comprise entre 0,01 % et 0,2 % en poids de la formulation de revêtement d'hydrogel, dans laquelle l'acide carboxylique est utilisé en une quantité comprise entre 0,1 % et 2 % en poids de la formulation de revêtement d'hydrogel, dans laquelle l'initiateur est utilisé en une quantité comprise entre 0,01 % et 0,12 % en poids de la formulation de revêtement d'hydrogel, dans laquelle l'agent de réticulation est utilisé en une quantité comprise entre 0,0005 % et 0,02 % en poids de la formulation de revêtement d'hydrogel, dans laquelle le correcteur de pH est utilisé en une quantité comprise entre 0,2 % et 1 % en poids de la formulation de revêtement d'hydrogel et dans laquelle le solvant est utilisé en une quantité comprise entre 95,66 % et 99,58 % en poids de la formulation de revêtement d'hydrogel.

2. Formulation de revêtement d'hydrogel selon la revendication 1, dans laquelle le bêta-glucane d'avoine est utilisé en une quantité comprise entre 0,1 % et 0,4 % en poids de la formulation de revêtement d'hydrogel.

3. Formulation de revêtement d'hydrogel selon la revendication 1, dans laquelle l'avoine colloïdale est utilisée en une quantité comprise entre 0,1 % et 0,4 % en poids de la formulation de revêtement d'hydrogel.

4. Formulation de revêtement d'hydrogel selon la revendication 1, dans laquelle le conservateur est choisi dans le groupe consistant en le benzoate de sodium, l'acide benzoïque, l'acide éthylènediaminetétraacétique disodique, le sorbate de calcium et des mélanges de ceux-ci.

5. Formulation de revêtement d'hydrogel selon la revendication 1, dans laquelle le conservateur est utilisé en une quantité comprise entre 0,05 % et 0,1 % en poids de la formulation de revêtement d'hydrogel.

6. Formulation de revêtement d'hydrogel selon la revendication 1, dans laquelle l'acide carboxylique est choisi dans le groupe consistant en l'acide itaconique, l'acide acrylique, l'acide méthacrylique, l'acide alginique et des mélanges de ceux-ci.

7. Formulation de revêtement d'hydrogel selon la revendication 1, dans laquelle l'acide carboxylique est utilisé en une quantité comprise entre 0,56 % et 1,12 % en poids de la formulation de revêtement d'hydrogel.

8. Formulation de revêtement d'hydrogel selon la revendication 1, dans laquelle l'initiateur est choisi dans le groupe consistant en le persulfate d'ammonium, le persulfate de sodium, le persulfate de potassium, la tétraméthyléthylènediamine et des mélanges de ceux-ci.

9. Formulation de revêtement d'hydrogel selon la revendication 1, dans laquelle l'initiateur est utilisé en une quantité comprise entre 0,03 % et 0,09 % en poids de la formulation de revêtement d'hydrogel.

10. Formulation de revêtement d'hydrogel selon la revendication 1, dans laquelle l'agent de réticulation est choisi dans le groupe consistant en le N-N'-méthylènebisacrylamide, le glutaraldéhyde, l'acide gallique et des mélanges de ceux-ci.

11. Formulation de revêtement d'hydrogel selon la revendication 1, dans laquelle l'agent de réticulation est utilisé en une quantité comprise entre 0,001 % à 0,01 % en poids de la formulation de revêtement d'hydrogel.

12. Formulation de revêtement d'hydrogel selon la revendication 1, dans laquelle le correcteur de pH comprend un premier correcteur de pH et un second correcteur de pH.

13. Formulation de revêtement d'hydrogel selon la revendication 12, dans laquelle le premier correcteur de pH est choisi dans le groupe consistant en l'acide citrique, l'acide ascorbique et des mélanges de ceux-ci.

14. Formulation de revêtement d'hydrogel selon la revendication 12, dans laquelle le premier correcteur de pH est utilisé en une quantité comprise entre 0,1 % et 0,5 % en poids de la formulation de revêtement d'hydrogel.

15. Formulation de revêtement d'hydrogel selon la revendication 12, dans laquelle le second correcteur de pH est choisi dans le groupe consistant en l'hydroxyde de sodium, l'hydroxyde de potassium et des mélanges de ceux-ci.

16. Formulation de revêtement d'hydrogel selon la revendication 12, dans laquelle le second correcteur de pH est utilisé en une quantité comprise entre 0,1 % et 0,5 % en poids de la formulation de revêtement d'hydrogel.

17. Formulation de revêtement d'hydrogel selon la revendication 1, dans laquelle le solvant est choisi dans le groupe consistant en l'eau distillée, l'eau douce, l'eau déminéralisée, l'eau ultrapure et des mélanges de celles-ci.

18. Formulation de revêtement d'hydrogel selon la revendication 1, dans laquelle le solvant est utilisé en une quantité comprise entre 97,18 % et 98,76 % en poids de la formulation de revêtement d'hydrogel.

19. Gant recouvert d'au moins une couche de revêtement préparée à partir de la formulation de revêtement d'hydrogel telle que revendiquée dans les revendications 1 à 18.

20. Procédé de préparation d'une formulation de revêtement d'hydrogel, dans lequel le procédé comprend les étapes consistant à :

   i. ajouter un premier correcteur de pH et du bêta-glucane d'avoine dans un premier solvant tout en agitant pour produire un premier mélange, dans lequel le premier mélange est agité à une vitesse de 500 tr/min à 1000 tr/min pendant 20 minutes à 40 minutes à une température comprise entre 85 °C et 95 °C ;
   ii. ajouter un second correcteur de pH dans un acide carboxylique tout en agitant pour produire un deuxième mélange, dans lequel le deuxième mélange est agité à une vitesse de 300 tr/min à 500 tr/min pendant 5 minutes à 15 minutes à une température comprise entre 20 °C et 30 °C ;
   iii. ajouter successivement le deuxième mélange obtenu à l'étape (ii), un agent de réticulation et un initiateur au premier mélange obtenu à l'étape (i) tout en agitant pour produire un troisième mélange, dans lequel le troisième mélange est agité à une vitesse de 200tr/min à 400tr/min pendant 160 minutes à 200 minutes à une température comprise entre 65 °C et 75 °C ;
   iv. ajouter un second solvant au troisième mélange obtenu à l'étape (iii) tout en agitant pour produire un quatrième mélange, dans lequel le quatrième mélange est agité à une vitesse de 200 tr/min à 400 tr/min pendant 10 minutes à 20 minutes à une température comprise entre 20 °C et 30 °C ; et
   v. ajouter successivement de l'avoine colloïdale et du benzoate de sodium sans ordre particulier au quatrième mélange obtenu à l'étape (iv) tout en agitant pour produire une formulation de revêtement d'hydrogel, dans lequel la formulation de revêtement d'hydrogel est agitée à une vitesse de 200 tr/min à 400 tr/min pendant 50 minutes à 70 minutes à une température comprise entre 20 °C et 30 °C.

21. Gant recouvert d'au moins une couche de formulation de revêtement d'hydrogel préparée à partir du procédé selon la revendication 20.

Figure 1

Figure 2